# FASCICULE DE BREVET EUROPEEN

(11) **EP 2 595 426 B1**
(45) Date de publication et mention de la délivrance du brevet: **08.10.2014**
(21) Numéro de dépôt: 11306489.3
(22) Date de dépôt: 15.11.2011
(51) Int. Cl.: H04W 36/00, H04W 88/06, H04W 88/10

(54) **Procédé de changement du point d'accès radio associé à un terminal, dans un réseau de télécommunication sans fil de type WiFi-DECT**
Verfahren zur Änderung des Funkzugangspunktes eines Endgeräts in einem drahtlosen Telekommunikationsnetz vom Typ WiFi-DECT
Method for changing the wireless access point associated with a terminal in a WiFi-DECT cordless telecommunications network

(43) Date de publication de la demande: 22.05.2013
(73) Titulaire: ALCATEL LUCENT, 92100 Boulogne-Billancourt (FR)
(72) Inventeur: Brunner, Fréderic, 67400 ILLKIRCH (FR)
(74) Mandataire: Sciaux, Edmond

(56) Documents cités:
- US-A1- 2005 181 822
- US-A1- 2007 104 218
- US-A1- 2008 250 142
- US-A1- 2010 279 689

## Description

L'invention concerne un procédé de changement du point d'accès radio auquel est associé un terminal, dans un réseau de télécommunication sans fil de type WiFi-DECT. L'invention concerne plus particulièrement les terminaux sans fil bi-modes WiFi-DECT (Le type WiFi correspond aux normes IEEE 802.11, et le type DECT correspond aux normes ETS 300 175). Un terminal bi-mode WiFi-DECT permet une communication téléphonique en mode DECT ou en mode WiFi mais le mode DECT est préféré parce qu'il procure la meilleure qualité de communication téléphonique. Un terminal bi-mode WiFi-DECT permet en outre une transmission de données en mode DECT ou en mode WiFi, mais le mode WiFi est préféré parce qu'il procure une plus grande bande passante.

Lorsqu'une zone de grande étendue doit être desservie par un réseau sans fil bi-mode WiFi-DECT, cette zone est constituée d'une pluralité de cellules, chaque cellule étant desservie par un point d'accès radio WiFi et un point d'accès radio DECT qui sont de préférence intégrés dans un même boîtier pour faciliter l'installation. Les terminaux sans fil sont mobiles, par conséquent il est parfois nécessaire de changer de point d'accès radio WiFi-DECT pendant une communication téléphonique, sans interrompre cette communication téléphonique. De même, si un terminal n'est pas en communication, il est parfois nécessaire de changer le point d'accès radio WiFi-DECT auquel est associé ce terminal de façon à ce qu'il soit toujours associé au point d'accès procurant la meilleure qualité de liaison radio, en vue d'une prochaine communication téléphonique et/ou transmission de données.

Le document US 2008/0250142 décrit un procédé pour changer de point d'accès radio en choisissant parmi plusieurs points d'accès, et changer éventuellement de technologie de transmission radio si un point d'accès supporte plusieurs technologies de transmission radio, de façon à satisfaire un critère défini par un paramètre fourni par le réseau. Le réseau et les terminaux disposent de moyens de gestion de ressources comportant, pour chacune des technologies de transmission radio, des moyens pour décider et exécuter un changement de point d'accès radio.

Le document US 2010/279689 décrit un procédé connu combinant un changement de point d'accès radio, puis un changement de technologie de transmission radio dans le nouveau point d'accès, quand celui-ci supporte deux technologies de transmission radio. Par exemple, il permet de transférer une communication téléphonique établie via une macro-cellule GSM vers une femto-cellule LTE quand le terminal s'approche d'une femto station de base bi-mode GSM-LTE. Le terminal, qui est en liaison avec une macro-cellule GSM, détecte un signal pilote GSM transmis par la femto station de base bi-mode GSM-LTE. Il décide alors de transférer la communication vers cette femto station de base bi-mode GSM-LTE. Il décide ensuite de passer du mode GSM au mode LTE. Le réseau et les terminaux disposent de moyens de gestion de ressources comportant, pour chacune des technologies de transmission radio GSM et LTE, des moyens pour décider et exécuter un changement de point d'accès radio.

Dans ce qui suit, on appellera « hors communication» l'état d'un émetteur-récepteur WiFi qui n'est pas en train d'émettre et recevoir des paquets de données (Ces données pouvant être des signaux téléphoniques). Il reste à l'écoute sur la fréquence porteuse sur laquelle il doit recevoir des paquets de données. Quand il doit émettre un paquet de données, il écoute la fréquence porteuse sur laquelle il doit émettre, et émet seulement s'il la trouve libre. Si la partie WiFi d'un terminal WiFi-DECT est hors communication, un procédé de changement du point d'accès radio doit permettre néanmoins l'association de cette partie WiFi avec un nouveau point d'accès WiFi-DECT. Mais si la partie WiFi de ce terminal est en communication, ce procédé doit en outre permettre une commutation de moyens de transmission utilisés par cette communication, pour maintenir cette communication sans interruption lorsque le terminal mobile est déplacé de la zone couverte par le premier point d'accès radio vers la zone couverte par le second point d'accès radio, ces deux zones se recouvrant partiellement.

Dans ce qui suit, on appellera « hors communication » l'état d'un émetteur-récepteur DECT qui n'est pas en cours de communication. Il reste alors synchronisé sur des signaux émis par une station de base. Quand il est en communication, il occupe un intervalle temporel sur une porteuse émise par une station de base. Si la partie DECT d'un terminal WiFi-DECT est hors communication, un procédé de changement du point d'accès radio doit permettre l'association de cette partie DECT avec un nouveau point d'accès WiFi-DECT. Mais si la partie DECT de ce terminal est en communication, ce procédé doit en outre permettre une commutation de moyens de transmission utilisés par cette communication, pour maintenir cette communication sans interruption lorsque le terminal mobile est déplacé de la zone couverte par le premier point d'accès radio vers la zone couverte par le second point d'accès radio.

Le changement du point d'accès radio auquel est associé un terminal doit pouvoir être réalisé quel que soit l'état (hors communication, ou en communication) de la partie DECT et l'état (hors communication, ou en communication) de la partie WiFi du terminal. Dans le cas où le terminal est hors communication, on parle d'itinérance (Roaming en anglais). Dans le cas où le terminal est en cours de communication on parle de transfert de communication intercellulaire (Handover en anglais).

Dans un réseau DECT, on définit une ou plusieurs « zones de localisation ». Chaque zone de localisation DECT peut comporter une ou plusieurs cellules, c'est-à-dire peut être desservie par un où plusieurs points d'accès radio. Dans un réseau d'entreprise, par exemple, il peut n'y avoir qu'une seule zone de localisation couverte par plusieurs points d'accès radio DECT. Mais il peut aussi y avoir plusieurs zone de localisation couvertes chacune par un ou plusieurs points d'accès radio DECT.

On connait un procédé permettant à un terminal DECT de changer de point d'accès radio DECT, lorsqu'il est déplacé alors qu'il est hors communication ou en communication. Ce procédé est décrit par les normes :
ETSI EN 300 175-3 part 3
ETSI EN 300 175-4 part 4
ETSI EN 300 175-5 part 5
Selon ce procédé connu, quand un terminal DECT n'est pas en communication, il se synchronise temporellement avec un des points d'accès. Lorsqu'il se déplace et détecte que la liaison radio est meilleure avec un nouveau point d'accès radio DECT qui ne fait pas partie de sa zone de localisation, et qu'il risque de perdre la synchronisation temporelle parce qu'il devient trop éloigné de son point d'accès synchronisant, il fait une « demande de localisation » au réseau, cette demande permettant de l'associer à une nouvelle zone de localisation.

Quand une demande d'établissement de communication arrive, tous les points d'accès radio DECT de la zone de localisation où se trouve le terminal sont alertés et ils diffusent un message de signalisation vers tous les terminaux. Le terminal destinataire répond en indiquant sa localisation exacte, c'est-à-dire le point d'accès auquel il est associé. Les points d'accès radio DECT connus du réseau pour recevoir les signaux destinés à ce terminal relaient alors les signaux destinés à ce terminal, jusqu'au point d'accès radio auquel il est actuellement associé.

On connait des procédés permettant à un terminal WiFi de changer de point d'accès radio WiFi pendant qu'il est hors communication, ou pendant une communication de données (ou une communication téléphonique). Pour gérer la mobilité des terminaux WiFi-DECT dans un réseau de télécommunication sans fil de type WiFi-DECT, la solution la plus immédiate consiste à utiliser en parallèle un procédé connu permettant de changer de point d'accès radio DECT pour la partie DECT du terminal (hors communication ou en communication), et un procédé connu permettant de changer de point d'accès radio WiFi pour la partie WiFi du terminal (hors communication ou en communication). Cependant cette solution est coûteuse parce que les procédés connus de transfert d'une communication de données dans un réseau WiFi sont assez coûteux en matériel :
1) Un premier procédé connu consiste à utiliser un commutateur centralisé, généralement unique, appelé contrôleur de mobilité WiFi, pour gérer la mobilité de tous les terminaux WiFi entre tous les point d'accès d'un réseau WiFi. Tous les points d'accès WiFi du réseau doivent être reliés à ce commutateur afin que tout le trafic WiFi passe par ce commutateur. Ce commutateur et son installation sont coûteux.
2) Un second procédé connu consiste à utiliser un protocole appelé Protocole Internet pour la Mobilité (Mobile Internet protocole en Anglais) normalisé par L'IETF (Internet Engineering Task Force). Il est destiné à autoriser la mobilité d'un utilisateur depuis un réseau IP vers un autre réseau IP tout en maintenant les connexions actives et la même adresse IP pour cet utilisateur. Son implémentation pour IPv4 est décrite dans la RFC 3344 et mis à jour dans la RFC 4721. L'implémentation pour IPv6 est définie dans la RFC 3775. Il nécessite deux serveurs spécifiques dans chaque réseau : un premier agent (Home Agent en anglais) qui mémorise les informations concernant les terminaux mobiles dont l'adresse permanente est située dans le réseau considéré, et un second agent (Foreign agent en anglais) qui mémorise les informations concernant les terminaux mobiles dont l'adresse permanente est située dans un réseau différent du réseau considéré. Ces deux serveurs sont coûteux.

Le but de l'invention est de proposer une solution moins coûteuse que d'utiliser en parallèle un procédé connu pour changer de point d'accès radio WiFi et un procédé connu pour changer de point d'accès radio DECT.

Un premier objet de l'invention est un procédé de changement du point d'accès radio associé à un terminal, dans un réseau de télécommunication sans fil de type WiFi-DECT comportant des terminaux et des points d'accès radio bi-modes WiFi-DECT reliés à un réseau local, caractérisé en ce pour changer de point d'accès radio bi-mode associé à un terminal, alors qu'une première liaison en mode WiFi et une première liaison en mode DECT ont été établies entre ce terminal et un premier point d'accès radio bi-modes WiFi-DECT ; il comporte les étapes consistant à :
- appliquer un procédé connu pour décider et exécuter un changement du point d'accès radio associé à ce terminal pour une première liaison en mode DECT, pour passer de la partie DECT de ce premier point d'accès bi-mode WiFi-DECT à la partie DECT d'un second point d'accès bi-mode WiFi-DECT ,
- et transférer la première liaison en mode WiFi de la partie WiFi de ce premier point d'accès bi-mode WiFi-DECT à la partie WiFi de ce second point d'accès bi-mode WiFi-DECT, lorsqu'est décidé le changement du point d'accès radio associé à ce terminal pour la première liaison en mode DECT, de ce premier point d'accès bi-modes WiFi-DECT à ce second point d'accès bi-mode WiFi-DECT.

La mise en oeuvre du procédé ainsi caractérisé est peu coûteuse parce que ce procédé réutilise essentiellement les moyens de commande existant pour changer de point d'accès DECT, en particulier ceux qui commandent un changement de point d'accès DECT pendant une communication téléphonique en mode DECT.

Selon un mode de mise en oeuvre préféré, pour changer de point d'accès radio associé à un terminal, alors que la partie WiFi de ce terminal est hors communication et que la partie DECT de ce terminal est hors communication ; le procédé comporte les étapes consistant à :
- appliquer un procédé connu d'itinérance pour décider d'associer la partie DECT de ce terminal à un autre point d'accès DECT,
- et décider d'associer la partie WiFi de ce terminal à ce second point d'accès bi-mode WiFi-DECT lorsqu'il est décidé de d'associer la partie DECT de ce terminal à ce second point d'accès bi-mode WiFi-DECT.

Selon un mode de mise en oeuvre préféré, pour changer de point d'accès radio associé à un terminal, alors que la partie WiFi de ce terminal est en cours de communication et que la partie DECT de ce terminal est en cours de communication, une première liaison en mode DECT et une première liaison en mode WiFi étant établies entre ce terminal et un premier point d'accès radio bi-modes WiFi-DECT; le procédé comporte les étapes consistant à :
- appliquer un procédé connu pour décider le transfert d'une communication d'un point d'accès DECT à un autre point d'accès DECT pour cette première liaison en mode DECT, et transférer la première liaison en mode WiFi de ce premier point d'accès bi-mode WiFi-DECT à un second point d'accès bi-mode WiFi-DECT, lorsqu'il est décidé de transférer la première liaison en mode DECT de ce premier point d'accès bi-modes WiFi-DECT à ce second point d'accès bi-mode WiFi-DECT.

Selon un mode de mise en oeuvre préféré, pour transférer la première liaison en mode WiFi de ce premier point d'accès bi-mode WiFi-DECT à ce second point d'accès bi-mode WiFi-DECT, il comporte les étapes consistant à :
- conserver deux liaisons, établies dans un réseau fixe, jusqu'au premier point d'accès bi-mode WiFi-DECT et couplées respectivement à la liaison en mode DECT et à la liaison en mode WiFi ;
- et relayer ces deux liaisons en établissant respectivement deux nouvelles liaisons entre le premier point d'accès bi-mode WiFi-DECT et le second point d'accès bi-mode WiFi-DECT dans le réseau fixe.

Un mode de mise en oeuvre préféré consiste en outre à remplacer une liaison WiFi de transmission de données par une liaison de transmission de données DECT lorsque cette liaison WiFi est interrompue, jusqu'à ce qu'une liaison de transmission de données WiFi puisse être établie de nouveau

Un autre objet de l'invention est un point d'accès bi-mode WiFi-DECT pour la mise en oeuvre de ce procédé.

L'invention sera mieux comprise et d'autres caractéristiques apparaîtront à l'aide de la description ci-dessous et des figures l'accompagnant :
- La figure 1 illustre la première phase d'un exemple de mise en oeuvre du procédé selon l'invention.
- La figure 2 illustre la seconde phase de cet exemple de mise en oeuvre du procédé selon l'invention, en cours de communication.
- La figure 3 représente les échanges de signalisation lorsqu'un transfert intercellulaire est réalisé pendant la transmission d'une suite de données d'un serveur d'application vers un terminal mobile, dans cet exemple de mise en oeuvre du procédé selon l'invention.
- La figure 4 représente les échanges de signalisation lorsqu'un transfert intercellulaire est réalisé pendant la transmission d'une suite de données d'un terminal mobile vers un serveur d'application, dans cet exemple de mise en oeuvre du procédé selon l'invention.

Le cas où la partie WiFi et la partie DECT sont toutes les deux **hors communication** est le plus simple, mais il faut distinguer deux cas :
1) Les points d'accès radio sont configurés de façon que chaque zone de localisation ne comporte qu'un seul point d'accès radio WiFi-DECT. Dans ce cas, le terminal change à la fois de zone de localisation et de point d'accès chaque fois qu'il a détecté un point d'accès permettant une meilleure liaison radio DECT.
   Le terminal fait automatiquement une demande de localisation lorsqu'il détecte que ce point d'accès permettant une meilleure liaison radio DECT appartient à une nouvelle zone de localisation. Lorsque le terminal change de zone de localisation, le nouveau point d'accès demande au réseau l'identité du point d'accès qui va servir d'accès au réseau extérieur, pour ce terminal, et ce terminal saura ainsi quel point d'accès pourra relayer (dans les deux directions) la prochaine communication.
2) Les points d'accès radio sont configurés de façon qu'une zone de localisation peut comporter plusieurs points d'accès radio WiFi-DECT. Dans ce cas, le terminal ne change pas forcément de zone de localisation chaque fois qu'il a détecté un point d'accès permettant une meilleure liaison radio DECT.
   Le comportement du terminal doit dans ce cas être modifié, par rapport au comportement classique d'un terminal DECT, de façon qu'il fasse une demande de localisation à chaque fois qu'il détecte un meilleur point d'accès, même s'il ne change pas de zone de localisation en fait. Lorsque le terminal change de zone de localisation, le nouveau point d'accès demande au réseau l'identité du point d'accès qui va servir d'accès au réseau extérieur, pour ce terminal. Ce terminal saura ainsi quel point d'accès pourra relayer (dans les deux directions) la prochaine communication.

Dans le cas où la partie WiFi et la partie DECT sont toutes les deux **hors communication,** le procédé selon l'invention consiste à appliquer un procédé connu d'itinérance pour décider d'associer la partie DECT de ce terminal à un autre point d'accès DECT ; et décider d'associer la partie WiFi de ce terminal à ce second point d'accès bi-mode WiFi-DECT lorsqu'il est décidé de d'associer la partie DECT de ce terminal à ce second point d'accès bi-mode WiFi-DECT (AP2).

Le cas où la partie WiFi et la partie DECT sont toutes les deux **en communication** est le plus complexe.

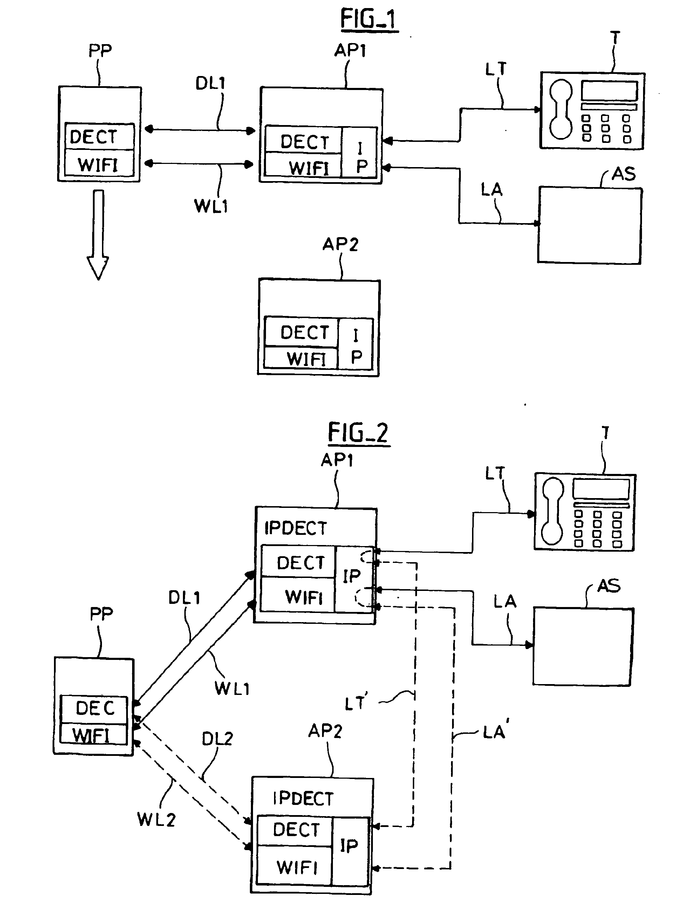

Dans l'exemple de réalisation représenté sur la **figure 1****,** un réseau de télécommunication d'entreprise, de type WiFi-DECT, comporte des terminaux tel que le terminal mobile PP, de type bi-mode WiFi-DECT, et des points d'accès radio bi-modes WiFi-DECT, AP1 et AP2. Ces points d'accès sont tous reliés à un réseau local Ethernet non représenté. Ce réseau local est relié classiquement à un réseau téléphonique public (non représenté) par une passerelle qui assure la conversion entre les protocoles utilisés dans le réseau local et les protocoles utilisés dans le réseau téléphonique public. D'autre part, ce réseau local est relié, par une autre passerelle, au réseau Internet (non représenté)

Ces points d'accès AP1 et AP2 comportent chacun : une interface radio DECT, une interface radio WiFi, et une interface IP (Pour communiquer avec un autre réseau au moyen du protocole Internet). A l'instant considéré, la partie DECT du terminal mobile PP est reliée par une liaison radio DECT, DL1, au point d'accès AP1. Une communication téléphonique en mode DECT est établie entre le terminal mobile PP et un terminal téléphonique distant T. Elle est supportée par la liaison radio DECT DL1, le point d'accès AP1, et une liaison téléphonique fixe LT à travers le réseau local et le réseau téléphonique public (La communication pourrait aussi avoir lieu avec un terminal mobile, via un réseau public de téléphonie mobile, ou tout simplement vers un autre terminal du réseau d'entreprise considéré).

Simultanément une communication de données, en mode WiFi, est établie entre le terminal mobile PP et un serveur d'application AS. Dans cet exemple, elle est supportée par une liaison radio WiFi, WL1, le point d'accès AP1, et une liaison fixe de transmission de données LA, via le réseau local Ethernet et via l'Internet (Dans d'autres exemples, le serveur d'application pourrait être dans le réseau d'entreprise considéré).

Au cours de ces communications, le terminal mobile PP est déplacé. Il arrive à la limite de la zone de couverture du point d'accès AP1, et il entre dans la zone de couverture du point d'accès AP2, ces deux zones se recouvrant partiellement.

**La** **figure 2** illustre la seconde phase de cet exemple de mise en oeuvre du procédé selon l'invention. A l'instant considéré, le terminal mobile PP demande au point d'accès AP2 le transfert, vers ce point d'accès AP2, de la communication téléphonique et de la communication de données qui sont en cours. Le point d'accès AP2 applique un procédé connu de transfert d'un point d'accès DECT à un autre point d'accès DECT, pour une communication téléphonique en mode DECT. Lorsque le point d'accès AP2 décide de transférer la communication téléphonique en mode DECT, du point d'accès AP1 au point d'accès AP2, ce point d'accès AP2 décide aussi de transférer communication de données, du point d'accès AP1 au point AP2. Pour cela, il commande :
- l'établissement d'une liaison LT' entre les points d'accès AP1 et AP2 pour relayer la liaison téléphonique LT jusqu'au point d'accès AP2 ;
- et l'établissement d'une liaison LA' entre les points d'accès AP1 et AP2 pour relayer la liaison de transmission de données LA jusqu'au point d'accès AP2.

Bien entendu, les liaisons LT et LA sont maintenues. Le point d'accès AP1 commande ensuite le relâchement des liaisons DL1 et WL1 qui le reliaient au terminal mobile PP.

La portée d'un point d'accès radio bi-mode n'est pas exactement la même en mode WiFi et en mode DECT. Elle est supérieure en mode DECT à cause d'une puissance d'émission supérieure. Il peut donc arriver que la liaison WiFi soit coupée avant que le transfert vers un autre point d'accès DECT-WiFi soit décidé, puisqu'il est décidé en fonction de la qualité des signaux DECT reçus. Un mode de mise en oeuvre préféré du procédé selon l'invention consiste à remplacer alors la liaison WiFi de transmission de données DL1 par une liaison de transmission de données DECT jusqu'à ce qu'une liaison de transmission de données WiFi puisse être établie de nouveau, c'est à dire quand le transfert aura été décidé pour la liaison téléphonique DECT. Il est connu de transmettre des données sur une liaison DECT au moyen d'un tunnel utilisant le protocole Internet. La bande passante disponible est alors beaucoup plus faible que sur une liaison WiFi, mais cela assure une liaison de secours.
Cette transmission de données par une liaison de transmission de données DECT peut être activée aussi lorsqu'un point d'accès détecte que les données à transmettre nécessitent seulement une faible bande passante, inférieure ou égale à celle disponible sur une liaison de transmission de données DECT. Cela permet de réduire la consommation d'énergie de l'émetteur-récepteur WiFi du terminal mobile concerné.

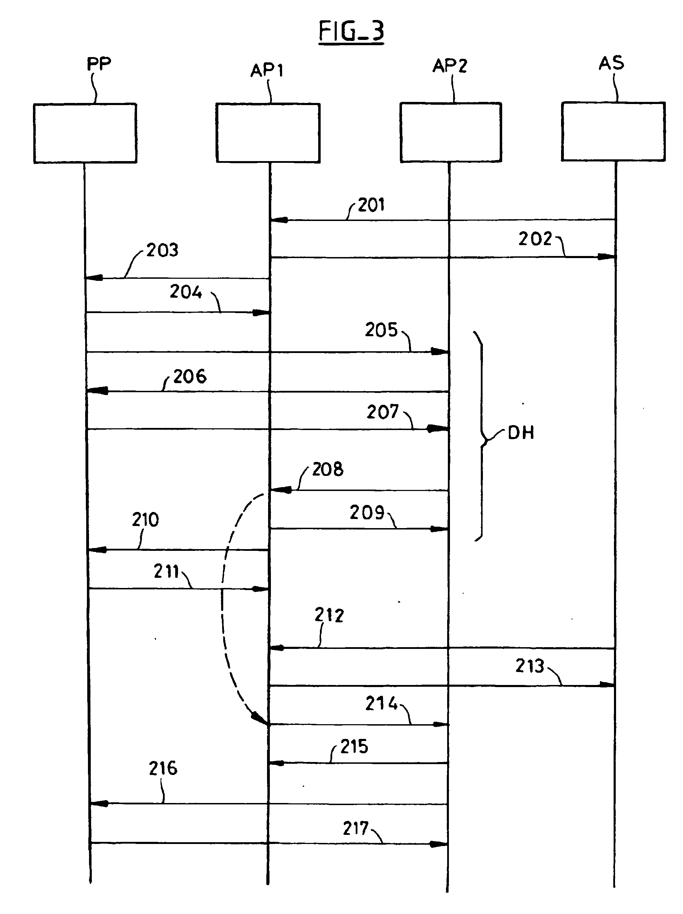

**La** **figure 3** représente les échanges de signalisation lorsqu'un transfert intercellulaire est réalisé pendant la transmission d'une suite de données du serveur d'application AS vers le terminal mobile PP, dans cet exemple de mise en oeuvre du procédé selon l'invention. Les opérations successives sont les suivantes :
201 : Le serveur d'application AS envoie un paquet de données au point d'accès AP1 via la ligne fixe LA.
202 : Le point d'accès AP1 envoie au serveur d'application AS un message d'accusé de réception, via la ligne fixe LA.
203 : Le point d'accès AP1 envoie le paquet de données au terminal mobile PP sur la liaison WiFi DL1de transmission de données.
204 : Le terminal mobile PP envoie un message d'accusé de réception au point d'accès AP1 sur la liaison WiFi WL1 de transmission de données.
205 : Le terminal mobile PP détecte qu'un transfert de la liaison DECT vers le point d'accès AP2 est nécessaire. Il établit la liaison DECT DL2 et la liaison WiFi WL2, et envoie un message de demande de transfert intercellulaire au point d'accès AP2 sur la liaison DECT DL2.
206 : Le point d'accès AP2 envoie un message de confirmation de transfert au terminal mobile PP sur la liaison DECT DL2.
207 : Le terminal mobile PP envoie un message d'acceptation de transfert au point d'accès AP2 sur la liaison DECT DL2.
208 : Le point d'accès AP1 envoie un message de recherche dans le réseau local pour demander quel point d'accès est actuellement en liaison DECT avec le terminal mobile PP qui demande un transfert.
209 : Le point d'accès AP2 répond à cette demande en donnant son adresse IP au point d'accès AP1.
210 : Le point d'accès AP1 envoie au terminal mobile PP un message lui indiquant qu'il va relâcher la liaison DECT DL1, sur la liaison DECT DL1.
211 : Le terminal mobile PP envoie un message d'accusé de réception au point d'accès AP2, sur la liaison DECT DL1. Puis la liaison DECT DL1 est relâchée par le point d'accès AP1.
212 : Le serveur d'application AS envoie un nouveau paquet de données au point d'accès AP1.
213 : Le point d'accès AP1 envoie au serveur d'application AS un message d'accusé de réception.
214 : Le point d'accès AP1 retransmet le paquet de données au point d'accès AP2, autrement dit il relaie la liaison LA de transmission de données en la prolongeant par une liaison LA' de transmission de données, à travers le réseau local, jusqu'au point d'accès AP2.
215 : Le point d'accès AP2 envoie au point d'accès AP1 un message d'accusé de réception.
216 : Le point d'accès AP2 envoie le paquet de données au terminal mobile PP sur la liaison WiFi WL2 de transmission de données.
217 : Le terminal mobile PP envoie un message d'accusé de réception au point d'accès AP2 sur la liaison WiFi WL2 de transmission de données.

Il est à remarquer que les opérations 205 à 211, référencées DH, sont constituées par des opérations d'un transfert intercellulaire DECT classique.

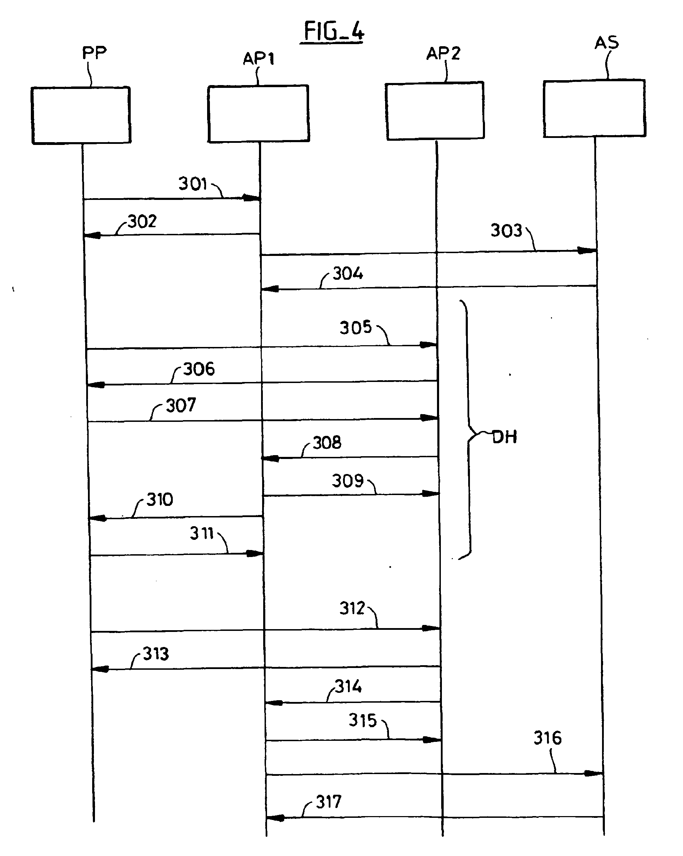

**La** **figure 4** représente les échanges de signalisation lorsqu'un transfert intercellulaire est réalisé pendant la transmission d'une suite de données du terminal mobile PP vers le serveur d'application AS, dans cet exemple de mise en oeuvre du procédé selon l'invention. Les opérations successives sont les suivantes :
301 : Le terminal mobile PP envoie un paquet de données au point d'accès AP1 sur la liaison WiFi WL1 de transmission de données.
302 : Le point d'accès AP1 envoie un message d'accusé de réception au terminal mobile PP sur la liaison WiFi WL1 de transmission de données.
303 : Le point d'accès AP1 retransmet le paquet de données au serveur d'application AS, via la liaison fixe LA de transmission de données.
304 : Le serveur d'application AS envoie un message d'accusé de réception au point d'accès AP1, via la ligne fixe LA.
305 : Le terminal mobile PP détecte qu'un transfert de la liaison DECT vers le point d'accès AP2 est nécessaire. Il établit la liaison DECT DL2 et la liaison WiFi WL2, et envoie un message de demande de transfert intercellulaire au point d'accès AP2 sur la liaison DECT DL2.
306 : Le point d'accès AP2 envoie un message de confirmation de transfert au terminal mobile PP sur la liaison DECT DL2.
307 : Le terminal mobile PP envoie un message d'acceptation de transfert au point d'accès AP2 sur la liaison DECT DL2.
308 : Le point d'accès AP1 envoie un message de recherche dans le réseau local pour demander quel point d'accès est actuellement en liaison DECT avec le terminal mobile PP qui demande un transfert.
309 : Le point d'accès AP2 répond à cette demande en donnant son adresse IP au point d'accès AP1.
310 : Le point d'accès AP1 envoie au terminal mobile PP un message lui indiquant qu'il va relâcher la liaison DECT DL1, sur la liaison DECT DL1.
311 : Le terminal mobile PP envoie un message d'accusé de réception au point d'accès AP2, sur la liaison DECT DL1. Puis la liaison DECT DL1 est relâchée par le point d'accès AP2.
312 : Le terminal mobile PP envoie un nouveau paquet de données au point d'accès AP2 sur la liaison WiFi WL2.
313 : Le point d'accès AP2 envoie un message d'accusé de réception au terminal mobile PP sur la liaison WiFi WL2.
314 : Le point d'accès AP2 retransmet le paquet de données au point d'accès AP1, autrement dit il relaie la liaison LA de transmission de données en la prolongeant par la liaison LA' de transmission de données, jusqu'au point d'accès AP1.
315 : Le point d'accès AP1 envoie au point d'accès AP2 un message d'accusé de réception.
316 : Le point d'accès AP1 envoie le paquet de données au serveur d'application AS via la liaison fixe LA.
317 : Le serveur d'application AS envoie un message d'accusé de réception au point d'accès AP2 via la liaison fixe LA.

Il est à remarquer que les opérations 305 à 311, référencées DH, sont constituées par des opérations d'un transfert intercellulaire DECT classique.

## Revendications

1. Procédé de changement du point d'accès radio associé à un terminal, dans un réseau de télécommunication sans fil de type WiFi-DECT comportant des terminaux radio bi-modes WiFi-DECT (PP) et des points d'accès radio bi-modes WiFi-DECT (AP1, AP2) reliés à un réseau local ;
caractérisé en ce pour changer de point d'accès radio bi-mode associé à un terminal, alors qu'une première liaison (WL1) en mode WiFi et une première liaison (DL1) en mode DECT ont été établies entre ce terminal et un premier point d'accès radio bi-modes WiFi-DECT (AP1) ; il comporte les étapes exécutées par le point d'accès radio et consistant à :
- appliquer un procédé connu pour décider et exécuter un changement du point d'accès radio associé à ce terminal pour une première liaison (DL1) en mode DECT, pour passer de la partie DECT de ce premier point d'accès bi-mode WiFi-DECT (AP1) à la partie DECT d'un second point d'accès bi-mode WiFi-DECT (AP2),
- et transférer la première liaison (WL1) en mode WiFi de la partie WiFi de ce premier point d'accès bi-mode WiFi-DECT (AP1) à la partie WiFi de ce second point d'accès bi-mode WiFi-DECT (AP2), lorsqu'est décidé le changement du point d'accès radio associé à ce terminal pour la première liaison (DL1) en mode DECT, de ce premier point d'accès bi-modes WiFi-DECT (AP1) à ce second point d'accès bi-mode WiFi-DECT (AP2).

2. Procédé selon la revendication 1, dans lequel, pour changer de point d'accès radio associé à un terminal, alors que la partie WiFi de ce terminal est hors communication et que la partie DECT de ce terminal est hors communication ; il comporte les étapes consistant à :
- appliquer un procédé connu d'itinérance pour décider d'associer la partie DECT de ce terminal à un autre point d'accès DECT (AP2),
- et décider d'associer la partie WiFi de ce terminal à ce second point d'accès bi-mode WiFi-DECT (AP2), lorsqu'il est décidé de d'associer la partie DECT de ce terminal à ce second point d'accès bi-mode WiFi-DECT (AP2)

3. Procédé selon la revendication 1, dans lequel, pour changer de point d'accès radio associé à un terminal, alors que la partie WiFi de ce terminal est en cours de communication et que la partie DECT de ce terminal est en cours de communication, une première liaison (DL1) en mode DECT et une première liaison (WL1) en mode WiFi étant établies entre ce terminal et un premier point d'accès radio bi-modes WiFi-DECT (AP1); il comporte les étapes consistant à :
- appliquer un procédé connu pour décider le transfert d'une communication d'un point d'accès DECT à un autre point d'accès DECT pour cette première liaison (DL1) en mode DECT,
- et transférer la première liaison (WL1) en mode WiFi de ce premier point d'accès bi-mode WiFi-DECT (AP1) à un second point d'accès bi-mode WiFi-DECT (AP2), lorsqu'il est décidé de transférer la première liaison en mode DECT de ce premier point d'accès bi-modes WiFi-DECT (AP1) à ce second point d'accès bi-mode WiFi-DECT (AP2).

4. Procédé selon la revendication 3, dans lequel, pour transférer la première liaison (WL1) en mode WiFi de ce premier point d'accès bi-mode WiFi-DECT (AP1) à ce second point d'accès bi-mode WiFi-DEC (AP2), il comporte les étapes consistant à :
- conserver deux liaisons (LT, LA), établies dans un réseau fixe, jusqu'au premier point d'accès bi-mode WiFi-DECT (AP1) et couplées respectivement à la liaison (DL1) en mode DECT et à la liaison (WL1) en mode WiFi ;
- et relayer ces deux liaisons (LT, LA) en établissant respectivement deux nouvelles liaisons (LT', LA') entre le premier point d'accès bi-mode WiFi-DECT (AP1) et le second point d'accès bi-mode WiFi-DECT (AP2) dans le réseau fixe.

5. Procédé selon la revendication 1, consistant en outre à remplacer une liaison WiFi de transmission de données (DL1) par une liaison de transmission de données DECT lorsque cette liaison WiFi est interrompue, jusqu'à ce qu'une liaison de transmission de données WiFi puisse être établie de nouveau.

6. Procédé selon la revendication 1, dans lequel, pour changer de point d'accès radio associé à un terminal, alors que la partie WiFi de ce terminal est hors communication et que la partie DECT de ce terminal est en cours de **communication,** une première liaison (WL1) en mode WiFi étant établies entre ce terminal et un premier point d'accès radio bi-modes WiFi-DECT (AP1) ; il comporte les étapes consistant à :
- appliquer un procédé connu pour décider le transfert d'une communication d'un point d'accès DECT à un autre point d'accès DECT pour cette première liaison (DL1) en mode DECT,
- et associer la partie WiFi de ce terminal à ce second point d'accès bi-mode WiFi-DECT (AP2), lorsqu'il est décidé de transférer la première liaison en mode DECT de ce premier point d'accès bi-modes WiFi-DECT (AP1) à ce second point d'accès bi-mode WiFi-DECT (AP2).

7. Procédé selon la revendication 6, dans lequel, pour transférer la première liaison (DECT1) en mode DECT de ce premier point d'accès bi-mode WiFi-DECT (AP1) à ce second point d'accès bi-mode WiFi-DECT (AP2), il comporte les étapes consistant à :
- conserver une liaison (LT), établies dans un réseau fixe, jusqu'au premier point d'accès bi-mode WiFi-DECT (AP1) et couplées respectivement à la liaison (DL1) en mode DECT ;
- et relayer cette liaison (LT) en établissant une nouvelle liaison (LT') entre le premier point d'accès bi-mode WiFi-DECT (AP1) et le second point d'accès bi-mode WiFi-DECT (AP2) dans le réseau fixe.

8. Procédé selon la revendication 1, dans lequel, pour changer de point d'accès radio associé à un terminal, alors que la partie WiFi de ce terminal est en cours de **communication** et que la partie DECT de ce terminal est hors communication, une première liaison (WL1) en mode WiFi étant établies entre ce terminal et un premier point d'accès radio bi-modes WiFi-DECT (AP1) ; il comporte les étapes consistant à :
- appliquer un procédé connu d'itinérance d'un point d'accès DECT à un autre point d'accès DECT pour la partie DECT de ce terminal,
- et transférer la première liaison (WL1) en mode WiFi de ce premier point d'accès bi-mode WiFi-DECT (AP1) à un second point d'accès bi-mode WiFi-DECT (AP2), lorsqu'il est décidé d'associer la partie DECT de ce terminal à ce second point d'accès bi-mode WiFi-DECT (AP2).

9. Procédé selon la revendication 8, dans lequel, pour transférer la première liaison (WL1) en mode WiFi de ce premier point d'accès bi-mode WiFi-DECT (AP1) à ce second point d'accès bi-mode WiFi-DECT (AP2), il comporte les étapes consistant à :
- conserver la liaison (LA), établies dans un réseau fixe, jusqu'au premier point d'accès bi-mode WiFi-DECT (AP1) et couplées à la liaison (WL1) en mode WiFi ;
- et relayer cette liaison (LA) en établissant une nouvelle liaison (LA') entre le premier point d'accès bi-mode WiFi-DECT (AP1) et le second point d'accès bi-mode WiFi-DECT (AP2) dans le réseau fixe.

10. Point d'accès radio bi-mode WiFi-DECT (AP1), pour un réseau de télécommunication sans fil de type WiFi-DECT, comportant des terminaux et des points d'accès radio bi-modes WiFi-DECT, **caractérisé en ce qu'**il comporte :
- une partie DECT et une partie WiFi pour établir simultanément une première liaison (DL1) en mode DECT et une première liaison (WL1) en mode WiFi avec un terminal mobile (PP) ;
- des moyens pour appliquer un procédé connu de changement du point d'accès radio associé à un terminal, pour une première liaison (DL1) en mode DECT, pour passer de la partie DECT d'un premier point d'accès bi-modes WiFi-DECT (AP1) à la partie DECT d'un second point d'accès bi-mode WiFi-DECT (AP2),
- et des moyens pour transférer la première liaison (WL1) en mode WiFi de la partie WiFi ce premier point d'accès bi-mode WiFi-DECT (AP1) à la partie WiFi d'un second point d'accès bi-mode WiFi-DECT (AP2), lorsqu'il est décidé de transférer la première liaison en mode DECT de ce premier point d'accès bi-modes WiFi-DECT (AP1) à ce second point d'accès bi-modes WiFi-DECT (AP2).

11. Point d'accès radio bi-mode WiFi-DECT (AP1), selon la revendication 10, dans lequel les moyens pour transférer la première liaison (WL1) en mode WiFi de ce premier point d'accès bi-mode WiFi-DECT (AP1) à un second point d'accès bi-mode WiFi-DECT (AP2), comporte des moyens pour :
- conserver deux liaisons (LT, LA) établies dans un réseau fixe jusqu'à ce point d'accès bi-mode WiFi-DECT (AP1) et couplées respectivement à la liaison (DL1) en mode DECT et à la liaison (WL1) en mode WiFi ;
- et relayer ces deux liaisons (LT, LA) en établissant respectivement deux nouvelles liaisons (LT', LA') entre ce point d'accès bi-mode WiFi-DECT (AP1) et un second point d'accès bi-mode WiFi-DECT (AP2) dans le réseau fixe.

12. Point d'accès radio bi-mode WiFi-DECT (AP1), selon la revendication 10,comportant en outre des moyens pour remplacer une liaison WiFi de transmission de données (DL1) par une liaison de transmission de données DECT lorsque cette liaison WiFi est interrompue, jusqu'à ce qu'une liaison de transmission de données WiFi puisse être établie de nouveau.

## Patentansprüche

1. Verfahren zum Wechseln des mit einem Endgerät assoziierten Funkzugangspunktes in einem drahtlosen Telekommunikationsnetzwerk vom Typ WiFi-DECT, welches mit einem lokalen Netzwerk verbundene WiFi-DECT-Dualmodus-Funkendgeräte (PP) und WiFi-DECT-Dualmodus-Funkzugangspunkte (AP1, AP2) umfasst;
**dadurch gekennzeichnet, dass** es, um einen mit einem Endgerät assoziierten Dualmodus-Funkzugangspunkt zu wechseln, während bereits eine erste Verbindung (WL1) im Wi-Fi-Modus und eine erste Verbindung (DL1) im DECT-Modus zwischen diesem Endgerät und einem ersten WiFi-DECT-Dualmodus-Funkzugangspunkt (AP1) bestehen, die folgenden von den Funkzugangspunkten ausgeführten Schritte umfasst:
- Anwenden eines bekannten Verfahrens, um einen Wechsel des mit diesem Endgerät für eine erste Verbindung (DL1) im DECT-Modus assoziierten Funkzugangspunktes zu entscheiden und durchzuführen, um von dem DECT-Teil dieses ersten WiFi-DECT-Dualmodus-Zugangspunktes (AP1) auf den DECT-Teil eines zweiten WiFi-DECT-Dualmodus-Zugangspunktes (AP2) überzugehen,
- und Übergeben der ersten Verbindung (WL1) im WiFi-Modus von dem WiFi-Teil dieses ersten WiFi-DECT-Dualmodus-Zugangspunktes (AP1) an den WiFi-Teil dieses zweiten WiFi-DECT-Dualmodus-Zugangspunktes (AP2), wenn der Wechsel des mit diesem Endgerät für die erste Verbindung (DL1) im DECT-Modus assoziierten Funkzugangspunktes von diesem ersten WiFi-DECT-Dualmodus-Zugangspunkt (AP1) zu diesem zweiten WiFi-DECT-Dualmodus-Zugangspunkt (AP2) entschieden wird.

2. Verfahren nach Anspruch 1, wobei es, um einen mit einem Endgerät assoziierten Funkzugangspunkt zu wechseln, während sich der WiFi-Teil dieses Endgerätes außer Kommunikation befindet und der DECT-Teil dieses Endgerätes außer Kommunikation befindet, die folgenden Schritte umfasst:
- Anwenden eines bekannten Roaming-Verfahrens, um zu entscheiden, den DECT-Teil dieses Endgerätes mit einem anderen DECT-Zugangspunkt (AP2) zu assoziieren,
- und Entscheiden, den WiFi-Teil dieses Endgeräts mit diesem zweiten WiFi-DECT-Dualmodus-Zugangspunkt (AP2) zu assoziierten, wenn entschieden wird, den DECT-Teil dieses Endgerätes mit diesem zweiten WiFi-DECT-Dualmodus-Zugangspunkt (AP2) zu assoziieren.

3. Verfahren nach Anspruch 1, wobei es, um einen mit einem Endgerät assoziierten Funkzugangspunkt zu wechseln, wenn sich der WiFi-Teil dieses Endgerätes in laufender Kommunikation befindet und der DECT-Teil dieses Endgerätes in laufender Kommunikation befindet, wobei eine erste Verbindung (DL1) im DECT-Modus und eine erste Verbindung (WL1) im WiFi-Modus zwischen diesem Endgerät und einem ersten WiFi-DECT-Dualmodus-Funkzugangspunkt (AP1) aufgebaut wurde, die folgenden Schritte umfasst:
- Anwenden eines bekannten Verfahrens, um die Übergabe einer Verbindung von einem DECT-Zugangspunkt an einen anderen DECT-Zugangspunkt für diese erste Verbindung (DL1) im DECT-Modus zu entscheiden,
- und Übergeben der ersten Verbindung (WL1) im WiFi-Modus von diesem ersten WiFi-DECT-Dualmodus-Zugangspunkt (AP1) an einen zweiten WiFi-DECT-Dualmodus-Zugangspunkt (AP2), wenn entschieden wird, die erste Verbindung im DECT-Modus dieses ersten WiFi-DECT-Dualmodus-Zugangspunkt (AP1) an diesen zweiten WiFi-DECT-Dualmodus-Zugangspunkt (AP2) zu übergeben.

4. Verfahren nach Anspruch 3, wobei es für die Übergabe der ersten Verbindung (WL1) im WiFi-Modus von diesem ersten WiFi-DECT-Dualmodus-Zugangspunkt (AP1) an diesen zweiten WiFi-DECT-Dualmodus-Zugangspunkt (AP2) die folgenden Schritte umfasst:
- Aufrechterhalten von zwei in einem Festnetz bis zum ersten WiFi-DECT-Dualmodus-Zugangspunkt (AP1) aufgebauten und jeweils an die Verbindung (DL1) im DECT-Modus und an die Verbindung (WL1) im WiFi-Modus gekoppelten Verbindungen (LT, LA);
- und Weitervermitteln dieser zwei Verbindungen (LT, LA) durch Aufbauen von jeweils zwei neuen Verbindungen (LT', LA') zwischen dem ersten WiFi-DECT-Dualmodus-Zugangspunkt (AP1) und dem zweiten WiFi-DECT-Dualmodus-Zugangspunkt (AP2).

5. Verfahren nach Anspruch 1, weiterhin darin bestehend, dass eine WiFi-Verbindung (DL1) für die Übertragung von Daten durch eine DECT-Verbindung für die Übertragung von Daten ersetzt wird, wenn diese WiFi-Verbindung unterbrochen wird, bis erneut eine WiFi-Verbindung für die Übertragung von Daten aufgebaut werden kann.

6. Verfahren nach Anspruch 1, wobei es, um einen mit einem Endgerät assoziierten Funkzugangspunkt zu wechseln, während sich der WiFi-Teil dieses Endgerätes außer Kommunikation befindet und der DECT-Teil dieses Endgerätes sich in laufender Kommunikation befindet, wobei eine erste Verbindung (WL1) im WiFi-Modus zwischen diesem Endgerät und einem ersten WiFi-DECT-Dualmodus-Funkzugangspunkt (AP1) besteht, die folgenden Schritte umfasst:
- Anwenden eines bekannten Verfahrens, um die Übergabe einer Kommunikation von einem DECT-Zugangspunkt an einen anderen DECT-Zugangspunkt für diese erste Verbindung (DL1) im DECT-Modus zu entscheiden,
- und Assoziieren des WiFi-Teils dieses Endgeräts mit diesem zweiten WiFi-DECT-Dualmodus-Zugangspunkt (AP2), wenn entschieden wird, die erste Verbindung im DECT-Modus dieses ersten WiFi-DECT-Dualmodus-Zugangspunktes (AP1) an diesen zweiten WiFi-DECT-Dualmodus-Zugangspunkt (AP2) zu übergeben.

7. Verfahren nach Anspruch 6, wobei es für die Übergabe der ersten Verbindung (DECT1) im DECT-Modus von diesem ersten WiFi-DECT-Dualmodus-Zugangspunkt (AP1) an diesen zweiten WiFi-DECT-Dualmodus-Zugangspunkt (AP2) die folgenden Schritte umfasst:
- Aufrechterhalten einer in einem Festnetz bis zum ersten WiFi-DECT-Dualmodus-Zugangspunkt (AP1) aufgebauten und an die Verbindung (DL1) im DECT-Modus gekoppelten Verbindung (LT);
- und Weitervermitteln dieser Verbindung (LT) durch Aufbauen einer neuen Verbindung (LT') zwischen dem ersten WiFi-DECT-Dualmodus-Zugangspunkt (AP1) und dem zweiten WiFi-DECT-Dualmodus-Zugangspunkt (AP2) im Festnetz.

8. Verfahren nach Anspruch 1, wobei es, um einen mit einem Endgerät assoziierten Funkzugangspunkt zu wechseln, während sich der WiFi-Teil dieses Endgerätes in laufender Kommunikation befindet und der DECT-Teil dieses Endgerätes sich außer Kommunikation befindet, wobei eine erste Verbindung (WL1) im WiFi-Modus zwischen diesem Endgerät und einem ersten WiFi-DECT-Dualmodus-Funkzugangspunkt (AP1) besteht, die folgenden Schritte umfasst:
- Anwenden eines bekannten Roaming-Verfahrens von einem DECT-Zugangspunkt zu einem anderen DECT-Zugangspunkt für den DECT-Teil dieses Endgerätes,
- und Übergeben der ersten Verbindung (WL1) im WiFi-Modus von diesem ersten WiFi-DECT-Dualmodus-Zugangspunkt (AP1) an einen zweiten WiFi-DECT-Dualmodus-Zugangspunkt (AP2), wenn entschieden wird, den DECT-Teil dieses Endgerätes mit diesem zweiten WiFi-DECT-Dualmodus-Zugangspunkt (AP2) zu assoziieren.

9. Verfahren nach Anspruch 8, wobei es für die Übergabe der ersten Verbindung (WL1) im WiFi-Modus von diesem ersten WiFi-DECT-Dualmodus-Zugangspunkt (AP1) an diesen zweiten WiFi-DECT-Dualmodus-Zugangspunkt (AP2) die folgenden Schritte umfasst:
- Aufrechterhalten der in einem Festnetz bis zum ersten WiFi-DECT-Dualmodus-Zugangspunkt (AP1) aufgebauten und an die Verbindung (WL1) im WiFi-Modus gekoppelten Verbindung (LA);
- und Weitervermitteln dieser Verbindung (LA) durch Aufbauen einer neuen Verbindung (LA') zwischen dem ersten WiFi-DECT-Dualmodus-Zugangspunkt (AP1) und dem zweiten WiFi-DECT-Dualmodus-Zugangspunkt (AP2) im Festnetz.

10. WiFi-DECT-Dualmodus-Funkzugangspunkt (AP1) für ein drahtloses Telekommunikationsnetzwerk vom Typ WiFi-DECT, welches WiFi-DECT-Dualmodus-Funkendgeräte und -Funkzugangspunkte umfasst, **dadurch gekennzeichnet, dass** er umfasst:
- Einen DECT-Teil und einen WiFi-Teil für den simultanen Aufbau einer ersten Verbindung (DL1) im DECT-Modus und einer ersten Verbindung (WL1) im WiFi-Modus mit einem mobilen Endgerät (PP);
- Mittel zum Anwenden eines bekannten Verfahrens für den Wechsel des mit einem Endgerät assoziierten Funkzugangspunktes für eine erste Verbindung (DL1) im DECT-Modus, um von dem DECT-Teil eines ersten WiFi-DECT-Dualmodus-Zugangspunktes (AP1) auf den DECT-Teil eines zweiten WiFi-DECT-Dualmodus-Zugangspunktes (AP2) überzugehen,
- und Mittel zum Übergeben der ersten Verbindung (WL1) im WiFi-Modus von dem WiFi-Teil dieses ersten WiFi-DECT-Dualmodus-Zugangspunktes (AP1) an den WiFi-Teil eines zweiten WiFi-DECT-Dualmodus-Zugangspunktes (AP2), wenn entschieden wird, die erste Verbindung im DECT-Modus dieses ersten WiFi-DECT-Dualmodus-Zugangspunktes (AP1) an diesen zweiten WiFi-DECT-Dualmodus-Zugangspunkt (AP2) zu übergeben.

11. WiFi-DECT-Dualmodus-Funkzugangspunkt (AP1) nach Anspruch 10, wobei das Mittel zum Übergeben der ersten Verbindung (WL1) im WiFi-Modus von diesem ersten WiFi-DECT-Dualmodus-Zugangspunkt (AP1) an einen zweiten WiFi-DECT-Dualmodus-Zugangspunktes (AP2) Mittel umfasst für das
- Aufrechterhalten von zwei in einem Festnetz bis zu diesem ersten WiFi-DECT-Dualmodus-Zugangspunkt (AP1) aufgebauten und jeweils an die Verbindung (DL1) im DECT-Modus und an die Verbindung (WL1) im WiFi-Modus gekoppelten Verbindungen (LT, LA);
- und Weitervermitteln dieser zwei Verbindungen (LT, LA) durch Aufbauen von jeweils zwei neuen Verbindungen (LT', LA') zwischen diesem WiFi-DECT-Dualmodus-Zugangspunkt (AP1) und einem zweiten WiFi-DECT-Dualmodus-Zugangspunkt (AP2) in dem Festnetz.

12. WiFi-DECT-Dualmodus-Funkzugangspunkt (AP1) nach Anspruch 10, weiterhin umfassend Mittel zum Ersetzen einer WiFi-Verbindung (DL1) für die Übertragung von Daten durch eine DECT-Verbindung für die Übertragung von Daten, wenn diese WiFi-Verbindung unterbrochen wird, bis erneut eine WiFi-Verbindung für die Übertragung von Daten aufgebaut werden kann.

## Claims

1. Method of changing the radio access point associated with a terminal,
in a wireless WiFi-DECT telecommunications network comprising dual-mode WiFi-DECT radio terminals (PP) and dual-mode WiFi-DECT radio access points (AP1, AP2) connected to a local area network;
**characterized in that** in order to change the dual-mode radio access point associated with the terminal, while a first link (WL1) in WiFi mode and a first link (DL1) in DECT both have been established between the terminal and a first dual-mode WiFi-DECT (AP1) radio access point ; it comprises the steps performed by the radio access points and consisting of:
- applying a known method for deciding on and executing a change of the radio access point associated with that terminal for a first DECT mode link (DL1), in order to switch from the DECT part of that first dual-mode Wi-Fi-DECT access point to the DECT part of a second dual-mode Wi-Fi-DECT access point (AP2),
- and transferring the first Wi-Fi mode link (WL1) from the Wi-Fi part of that first dual-mode Wi-Fi-DECT access point (AP1) to the Wi-Fi part of that second dual-mode Wi-Fi-DECT access point (AP2), whenever it is decided to change the radio access point associated with that terminal for the first DECT mode link (DL1), from that first dual-mode Wi-Fi-DECT access point (AP1) to that second dual-mode Wi-Fi-DECT access point (AP2).

2. A method according to claim 1, wherein, in order to change the radio access point associated with a terminal while that terminal's Wi-Fi part is not in communication and that terminal's DECT part is not in communication; it comprises the steps consisting of:
- applying a known roaming method to decide to associate the DECT part of that terminal with another DECT access point (AP2),
- and of deciding to associate that terminal's Wi-Fi part with that second dual-mode Wi-Fi-DECT access point (AP2) when it is decided to associate that terminal's DECT part with that second dual-mode Wi-Fi-DECT access point (AP2).

3. A method according to claim 1, wherein, in order to change the radio access point associated with a terminal, while that terminal's Wi-Fi part is in communication and that terminal's DECT part is in communication, a first DECT mode link (DL1) and a first Wi-Fi mode link (WL1) having been established between that terminal and a first dual-mode Wi-Fi-DECT radio access point (AP1), it comprises the steps consisting of:
- applying a known method for deciding to transfer a communication from a DECT access point to another DECT access point for that first DECT mode link (DL1),
- and transferring the first Wi-Fi mode link (WL1) from that first dual-mode Wi-Fi-DECT access point (AP1) to a second dual-mode Wi-Fi-DECT access point (AP2), whenever it is decided to transfer the first DECT mode link from that first dual-mode Wi-Fi-DECT access point (AP1) to that second dual-mode Wi-Fi-DECT access point (AP2).

4. A method according to claim 3, wherein, to transfer the first Wi-Fi mode link (WL1) from that first dual-mode WiFi-DECT access point
(AP1) to that second dual-mode WiFi-DECT access point (AP2), it comprises the step consisting of
- preserving two links (LT, LA), established in a fixed-line network, all the way to the first dual-mode Wi-Fi-DECT access point (AP1) and respectively coupled to the DECT mode link (DL1) and to the Wi-Fi mode link (WL1);
- and relaying these two links (LT, LA) by respectively establishing two new links (LT', LA') between the first dual-mode Wi-Fi-DECT access point (AP1) and the second dual-mode Wi-Fi-DECT access point (AP2) in the fixed-line network.

5. A method according to claim 1, further consisting of replacing a Wi-Fi data transmission link (DL1) with a DECT data transmission link whenever that Wi-Fi link is interrupted, until a Wi-Fi data transmission link can be established again.

6. A method according to claim 1, wherein, in order to change the radio access point associated with a terminal, while that terminal's Wi-Fi part is not in communication and that terminal's DECT part is in communication, a first Wi-Fi mode link (WL1) having been established between that terminal and a first dual-mode Wi-Fi-DECT radio access point (AP1); it comprises the steps consisting of:
- applying a known method for deciding to transfer a communication from a DECT access point to another DECT access point for that first DECT mode link (DL1),
- and associating that terminal's Wi-Fi part with that second Wi-Fi-DECT access point (AP2), whenever it is decided to transfer the first DECT mode link from that first dual-mode Wi-Fi-DECT access point (AP1) to that second dual-mode Wi-Fi-DECT access point (AP2).

7. A method according to claim 6, wherein, in order to transfer the first DECT mode link (DECT1) from that first dual-mode Wi-Fi-DECT access point (AP1) to that second dual-mode Wi-Fi-DECT access point (AP2), it comprises the steps consisting of:
- preserving a link (LT) established in a fixed network to the first dual-mode Wi-Fi-DECT access point (AP1) and respectively coupled to the DECT mode link (DL1);
- and relaying this link (LT) by establishing a new link (LT') between the first dual-mode Wi-Fi-DECT access point (AP1) and the second dual-mode Wi-Fi-DECT access point (AP2) in the fixed-line network.

8. A method according to claim 1, wherein, in order to change the radio access point associated with a terminal, while that terminal's Wi-Fi part is in communication and that terminal's DECT part is not in communication, a first Wi-Fi mode link (WL1) having been established between that terminal and a first dual-mode Wi-Fi-DECT radio access point, it comprises the steps consisting of:
- applying a known roaming method from one DECT access point to another DECT access point for that terminal's DECT part,
- and transferring the first Wi-Fi mode link (WL1) from that first dual-mode Wi-Fi-DECT radio access point (AP1) to a second dual-mode Wi-Fi-DECT radio access point (AP2), whenever it is decided to associate that terminal's DECT part with that second dual-mode Wi-Fi-DECT radio access point (AP2).

9. A method according to claim 8, wherein, in order to transfer the first Wi-Fi mode link (WL1) from that first dual-mode Wi-Fi-DECT access point (AP1) to that second dual-mode Wi-Fi-DECT access point (AP2), it comprises the steps consisting of:
- saving the link established within a fixed network, all the way to a first dual-mode Wi-Fi-DECT access point (AP1) and coupled to the Wi-Fi mode link (WL1);
- and relaying this link (LA) by establishing a new link (LA') between the first dual-mode Wi-Fi-DECT access point (AP1) and the second dual-mode Wi-Fi-DECT access point (AP2) in the fixed-line network.

10. A dual-mode Wi-Fi-DECT radio access point (AP1), for a Wi-Fi-DECT wireless telecommunication network, comprising terminals and dual-mode Wi-Fi-DECT radio access points, **characterized in that** it comprises:
- a DECT part and a Wi-Fi part for simultaneously establishing a first DECT mode link (DL1) and a first Wi-Fi mode link (WL1) with a mobile terminal (PP);
- means for applying a known method for changing the radio access point associated with a terminal, for a first DECT mode link (DL1), to switch from the DECT part of a first dual-mode Wi-Fi-DECT access point (AP1) to the DECT part of a second dual-mode Wi-Fi-DECT access point (AP2),
- and means for transferring the first Wi-Fi mode link (WL1) from that first dual-mode Wi-Fi-DECT access point (AP1) to a second dual-mode Wi-Fi-DECT access point (AP2), whenever it is decided to transfer the first DECT mode link from that first dual-mode Wi-Fi-DECT access point (AP1) to that second dual-mode Wi-Fi-DECT access point (AP2).

11. A dual-mode Wi-Fi-DECT access point (AP1), according to claim 10,
wherein the means for transferring the first Wi-Fi mode link (WL1) from that first dual-mode Wi-Fi-DECT access point (AA1) to that second dual-mode Wi-Fi-DECT access point (AP2), it comprises the steps consisting of:
- preserving two links (LT, LA), established in a fixed-line network, all the way to the first dual-mode Wi-Fi-DECT access point (AP1) and respectively coupled to the DECT mode link (DL1) and to the Wi-Fi mode link (WL1);
- and relaying these two links (LT, LA) by respectively establishing two new links (LT', LA') between that dual-mode Wi-Fi-DECT access point (AP1) and the second dual-mode Wi-Fi-DECT access point (AP2) in the fixed-line network.

12. A dual-mode Wi-Fi-DECT access point (AP1), according to claim 10, further comprising means for replacing a Wi-Fi data transmission link (DL1) with a DECT data transmission link whenever that Wi-Fi link is interrupted, until a Wi-Fi data transmission link can be established again.
